# EUROPEAN PATENT SPECIFICATION

(11) **EP 1 596 977 B1**
(45) Date of publication and mention of the grant of the patent: **26.08.2015**
(21) Application number: 03782399.4
(22) Date of filing: 15.12.2003
(51) Int. Cl.: B01J 8/18, B01J 8/24, B01J 8/00

(54) **METHOD AND PLANT FOR CONTROLLING THE PROCESS CONDITIONS IN A REACTOR**
VERFAHREN UND ANLAGE ZUR STEUERUNG DER VERFAHRENSZUSTÄNDE IN EINEM REAKTOR
PROCEDE ET INSTALLATION DE COMMANDES DE CONDITIONS DE PROCESSUS DANS UN REACTEUR

(30) Priority: 20.12.2002 DE 10260943
(43) Date of publication of application: 23.11.2005
(73) Proprietor: Outotec (Finland) Oy, 02230 Espoo (FI)
(72) Inventor: SELT, Wolfgang, 65719 Hofheim (DE); KAPPES, Torsten, 60488 Frankfurt am Main (DE); STRÖDER, Michael, 61267 Neu-Anspach (DE)
(74) Representative: Keil & Schaafhausen Patent- und Rechtsanwälte
(86) International application number: PCT/EP2003/014226
(87) International publication number: WO 2004/056466

(56) References cited:
- EP-A- 0 093 063
- EP-A- 0 181 626
- WO-A-96/18076
- WO-A-99/63310
- US-A- 4 867 343
- US-A- 5 226 374
- PATENT ABSTRACTS OF JAPAN vol. 0050, no. 06 (M-050), 16 January 1981 (1981-01-16) & JP 55 140008 A (EBARA CORP), 1 November 1980 (1980-11-01)

## Description

### Technical field

The invention relates to a method of controlling the process conditions, in particular the temperature, in a reactor of a plant into which, in particular, granular material is introduced, which is transported through a conveying line to the reactor. The present invention also relates to a plant for carrying out this method.

To control the temperature in reactors of plants for the heat treatment of material introduced, a temperature control with a temperature sensor provided in the reactor is used in a conventional manner, the temperature sensor measuring the current reactor temperature and transmitting it to the temperature control. If the measured temperature deviates from the predetermined desired temperature value, the temperature control influences the temperature in the reactor. This is done either by controlling the mass flow of the material fed to the plant (raw material charge) or by controlling the mass flow of the fuel.

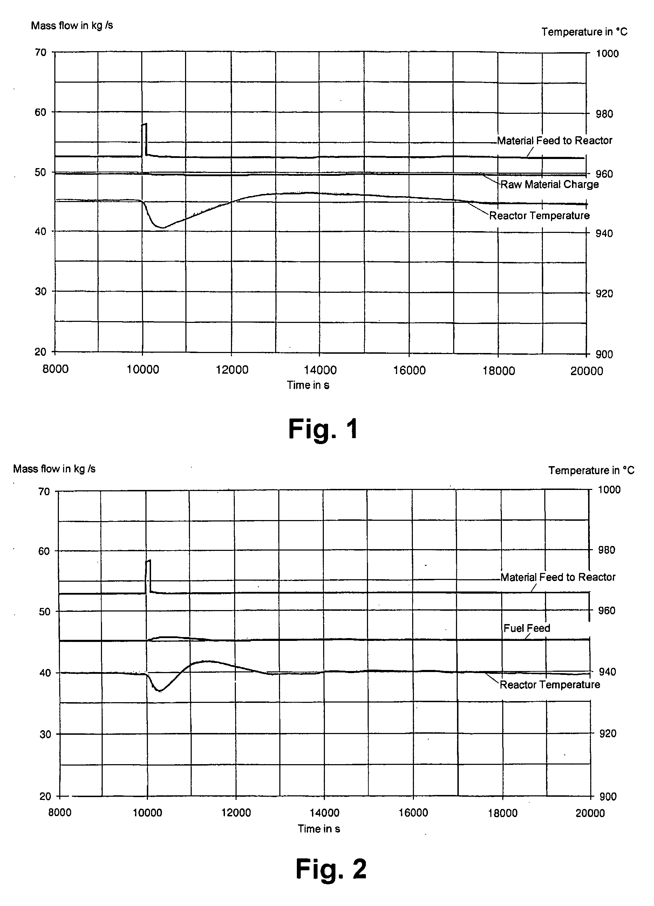

In the case of such a temperature control, with manipulating intervention in the raw material charge, disturbing effects such as fluctuating material delivery inside the plant right up to the reactor and material moisture and also uneven temperature behaviour lead to marked weaknesses with regard to dynamics and controlled variable. Fig. 1 shows the effects which a brief disturbance in the material feed to the reactor has on the reactor temperature. A briefly increased material feed leads immediately to a marked reduction in the reactor temperature. The temperature control subsequently compensates for this reduction in the reactor temperature again in the course of time by means of a slightly reduced raw material charge. On the whole, however, it takes a comparatively long time for this brief disturbance in the material feed to the reactor to be corrected again.

Furthermore, a temperature control with manipulating intervention in the fuel feed is known. This form of control is superior in control quality to the control of the mass flow of the raw material charge, as can be seen from Fig. 2. The same disturbance in the material feed to the reactor is compensated for by a change in the fuel mass flow (fuel feed) and leads to the reactor temperature already assuming the desired set point again substantially quicker.

The US 5,226,374 discloses a method of controlling combustion in a fluidizedbed incinerator comprising measuring a supply rate of incineration waste. When the supply rate of incineration waste is higher than a predetermined value, the supply rate of the incineration waste of the dust feeder is decreased to suppress a combusting operation. Further, i.e. an induced gas rate of an exhaust gas induced blower of the incinerator is increased to suppress an increase in an incinerator internal pressure. The supply rate of incineration waste is measured by a measuring unit using a photoelectric element arranged on a shoot for supplying incineration waste.

The JP 55140008 (Patent Abstracts of Japan) describes a high accuracy control of temperature by measuring the temperature in the fluidized-bed and controlling the amount of floating medium forming the fluidized-bed in order to adjust the temperature.

In the EP 0 093 063 A1 a temperature control of a fluidized-bed reactor is described measuring the temperature in the fluidized-bed of the reactor and varying the temperature of the material transported into the reactor by mixing up material out of two conduits with higher and lower temperature. A similar method is employed in the WO 96/18076 A1 describing a gas cooler having a circulating fluidized-bed. Hot gas is introduced into a mixing chamber where it is mixed with solids having a temperature lower than that of the gas, whereby the temperature of the mixing chamber settles to a mixing temperature. The mixture of the gas and solids is taken from the mixing chamber via a riser to a solids separator, thereby regulating the temperature of a superheated steam generated in connection with the gas cooling.

All of these controls therefore have the disadvantage that a control deviation (temperature deviation) first has to be discovered in the reactor before the energy input can be correspondingly adapted and the control deviation corrected as a result. A further disadvantage is the strong dead-time behaviour of such reactor systems (big masses of brick lining and high product inventory). In some processes, however, even just brief temperature fluctuations lead to losses in the product quality.

### Description of the invention

Object of the present invention, therefore, is to control the process conditions, in particular the temperature, in a reactor as constantly as possible to a set point predetermined in relation to the process.

In a method of the type mentioned at the beginning for controlling e.g. the temperature, this object is essentially achieved in that the material quantity transported in the conveying line is determined and is used as control variable and/or disturbance variable for controlling the process conditions, in particular the temperature. This has hitherto not been conventional practice in the case of granular material, because the determination of the material quantity in a conveying line in the case of granular material is very complicated. However, by virtue of the fact that, according to the invention, the material quantity fed to the reactor is determined in advance, namely in a conveying line to the reactor, and this variable is used directly as control variable and/or disturbance variable for the control, possible fluctuations in the reactor temperature become apparent in advance and can be corrected before a change in the temperature or other process conditions occurs due to the changed material quantity entering the reactor. The method of controlling the temperature in a reactor, according to the invention, is thus also quite generally a method of producing constant process conditions in a reactor, in particular in order to keep the temperature in and/or the material feed to a reactor (material charge introduced into a reactor) of a plant constant. The determination of the material quantity of the material introduced into the reactor consists in the measurement of the pressure and/or of the pressure loss in the conveying line upstream of the reactor. Such a conveying line may in particular be an airlift, with which material is conveyed upwards. The measurement of the pressure or of the differential pressure between start and end of the conveying line of the airlift allows the amount of material which is transported to be accurately deduced. According to the invention, it has been found that this method can be used very accurately even in the case of granular material without recourse to density measuring with radioactive material for example.

To this end, according to a practical refinement of the idea according to the invention, the material quantity in the conveying line can be controlled to a predeterminable value. In this case, the material quantity is a control variable of the control. The method according to the invention therefore constitutes a control of the material charge introduced into a plant having a reactor in which the material in particular is heated, the material being introduced into the plant via a conveyor for example and being transported by a conveying line directly or via intermediate stages to the reactor, the material quantity in the conveying line being determined and being controlled to a predeterminable value. As a result, the material quantity introduced into the reactor is kept essentially constant, so that, in the reactor, fluctuations in the material quantity which may cause a temperature difference and/or a change in the stoichiometry do not occur or are minimized.

The material quantity in the conveying line, in a simple manner, can be controlled by a conveyor, with which the material is introduced into the plant, in particular by varying the rotational speed of a material-charging screw and/or by a weighfeeder (proportional weigher belt) upstream of the material-charging screw. This control eliminates the production-reducing effect of temporary deposits of the material-charging screw for the case where no weighfeeder is present. If a weighfeeder is present, the production-reducing effect of fluctuating material moisture is also appropriately compensated for.

In a further practical refinement of the method according to the invention, the heat supply to the reactor can depend on the material quantity determined. In this case, the material quantity is a disturbance variable of the control. The method according to the invention therefore constitutes a temperature control in a reactor into which material to be heated is introduced, the material quantity of the material introduced being determined continuously before being fed into the reactor and the heat supply depending on the material quantity determined. This control variant can be used separately from the above-described control of the material charge introduced into the reactor or of the material feed to the reactor. The control in this case is a disturbance feedforward control (the disturbance variables are fluctuations in the material mass flow to the reactor) to a subordinate heat-supply controller which, on the basis of this information, detects the changed material charge itself, this changed material charge becoming apparent, and corrects the changed energy requirement in anticipation of the reactor temperature change to be expected. With this control, it is possible to keep the reactor temperature constant within very narrow limits, which has a very positive effect on the product quality. Furthermore, the lining of the reactor is protected to a considerable degree, since the previous alternating stress decreases substantially with an improved temperature constancy and thus a prolonged service life can be expected.

According to the invention, the two aforesaid method variants of the control may also be combined with one another as a temperature and material-charge control. In this case, the material-charge control is in particular connected upstream of the temperature control. By this preliminary control, fluctuations of the material quantity fed to the reactor can be largely avoided. Since fluctuations in the material charge always lead to changes in the reactor temperature, this material-charge control connected upstream helps to assist the temperature control and further reduce control deviations in the reactor temperature. In this sense, the material-charge control is a control for producing constant process conditions which is connected upstream of the actual temperature control and to which in particular the temperature in the reactor also belongs.

The heat supply to the reactor is preferably effected by burning fuel in the reactor, the fuel mass flow being controlled for setting the heat supply. The change in the fuel mass flow, which change directly influences the heat supply, can be controlled in an especially simple and efficient manner, so that a correction of the heat supply via the fuel mass flow offers an especially quick and direct control means.

According to the invention, in a preferred refinement of the method, in addition to the material quantity of the material fed to the reactor, the reactor temperature is also measured, the heat supply then additionally depending on the reactor temperature determined, which is correspondingly taken into account by the temperature control. This temperature measurement is then effected optionally and in addition to the measurement of the material quantity in the conveying line. In particular, the fuel mass flow set by the temperature control by means of a control element can depend on the quantity of the fed material and on the reactor temperature, which are then combined in corresponding function blocks to form an overall manipulated variable. In this case, various control types, for example P, PI, PID or suchlike controls, may be realized in the function blocks and/or control elements.

Since the change in the heat supply, in particular during a change in the fuel mass flow, causes a rapid change in the reactor temperature, provision is made according to the invention for the time from the determination of the material quantity, for example in the conveying line, until the feeding into the reactor to be taken into account in the control of the heat supply. In particular if the material is already (pre)-dried when the material quantity is determined, the short dead time until the material is actually introduced into the reactor can be taken into account especially accurately on account of the constant process conditions.

A possible material discharge between the determination of the material quantity and the feeding of the material into the reactor is preferably also determined if need be and is taken into account during the control, in particular of the material feed and/or of the heat supply. Such a material discharge may be, for example, a reactor bypass in which material is branched off before the feeding into the reactor and is mixed again with material treated in the reactor after this material treated in the reactor has been discharged. Such a bypass mass flow must be deducted, for example, when determining the heat or fuel requirement.

In order to reduce disturbing effects when determining the material quantity, in particular due to residual moisture of the raw material introduced, and in order to eliminate the effect of the material moisture during the delivery of the material into the plant, the material may advantageously be dried and/or preheated before the determination of the material quantity in the conveying line. In particular, constant measuring conditions then prevail, so that the effects of the material introduced into the reactor on the temperature prevailing in the reactor can be accurately estimated and taken into account by the control.

This control can be used in a multiplicity of reactor types. According to special refinement of the method according to the invention, a gas/solid suspension can form in the reactor, for example as a circulating fluidized bed. In these reactor types, for certain processes, for example calcination, it has proved to be especially important and advantageous that the reactor temperature can be accurately maintained within marginal fluctuations. The methods described above may be used, for example, for the temperature control of a reactor having a circulating fluidized bed during alumina calcination. In particular moist hydrate, for example, can be introduced as raw material into the plant.

The present invention also relates to a plant for the heat treatment of material fed to a reactor, in particular for carrying out the method described above. The plant has a conveying line for the transport of granular material to the reactor and at least one control. According to the invention, the control is connected to a measuring device for determining the material quantity of the granular, in particular fine-grained, material transported in the conveying line to the reactor. As a result, the disturbance variables of a fluctuating material delivery and moisture can be taken into account by the plant control in order to correct the process conditions in advance, in particular the reactor temperature and the material charge introduced into the reactor, and thereby keep the said process conditions constant.

The conveying line is a fluid-pressure conveying line, in particular a preferably perpendicularly arranged rising line of an airlift. It has been found that, in contrast to conventional methods of determining the quantity of fine-grained material which is transported in a conveying line, the quantity in a fluid-pressure conveying line can be accurately determined without a large measuring equipment.

To this end, the measuring device is preferably a differential-pressure measuring device for measuring the differential pressure over the conveying line.

The control provided according to the invention in the plant may be a temperature control, a material-charge control or a combined temperature and material-charge control. This provides a plant for the heat treatment of material fed to a reactor, in particular for carrying out the method described above, having a conveying line for the transport of material to the reactor and a temperature control for the reactor and/or a material-charge control, which is characterized by a measuring device which is connected to the temperature control and/or the material-charge control and is intended for determining the material quantity of the material transported in the conveying line.

Furthermore, a temperature sensor connected to the temperature control is advantageously arranged in the reactor.

Furthermore, according to the invention, the temperature control has a control element and, if need be, function blocks having a characteristic or a family of characteristics for controlling a fuel mass flow, supplied for the combustion, on the basis of the determined material quantity and/or the measured reactor temperature. As a result, the fuel quantity fed to the reactor for heat generation can be adapted to the actual reactor temperature in an especially quick and simple manner, the control for the fuel mass flow on the basis of the reactor temperature determined being connected side by side to the control for the fuel mass flow on the basis of the material quantity determined.

According to the invention, the material-charge control may be connected to a conveyor for the controlled introduction of material into the plant, so that the material quantity in the conveying line can be controlled to a predeterminable value. To this end, the conveyor preferably has a material-charging screw and/or a weighfeeder.

To pretreat the introduced material, one or more drying devices, for example venturi dryers, may be provided upstream and/or downstream of the conveying line.

Developments, advantages and possible applications of the invention follow from the description below of exemplary embodiments and from the drawing. In this case, all the features described and/or shown diagrammatically belong to the subject matter of the invention on their own or in any desired combination irrespective of their compilation in the claims or what they refer back to.

### Brief description of the drawing

In the drawing:
- Fig. 1: shows the control behaviour of a reactor temperature control by controlling the raw-material charge during a disturbance in the material feed to the reactor;
- Fig. 2: shows the control behaviour of a reactor temperature control by controlling the fuel feed during a disturbance in the material feed to the reactor;
- Fig. 3: shows a plant according to the invention having a temperature control and a material-charge control according to a first embodiment;
- Fig. 4: shows a plant according to the invention having a temperature control and a material-charge control according to a second embodiment, and
- Fig. 5: shows a simplified controlled system of the temperature control according to the invention.

### Detailed description of the preferred embodiments

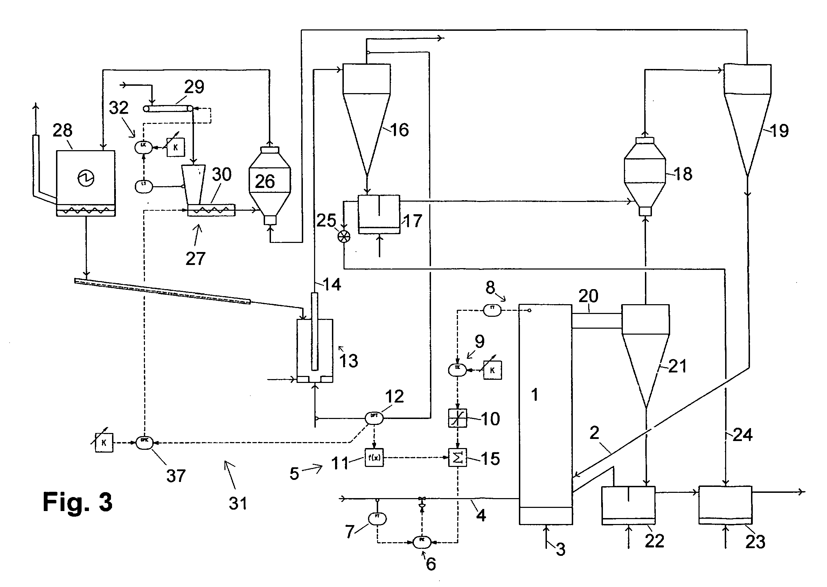

A plant according to the invention as shown in Fig. 3 has, as reactor 1, a reactor with a circulating fluidized bed, in which material introduced is heated by burning fuel.

The material fed to the reactor 1 via a material-feed line 2, in particular granular or fine-grained solids or hydrates or the like, is caught by a gas flow flowing through a gas-feed pipe 3 from below into the reactor 1 and is swirled in the reactor 1 to form a circulating fluidized bed.

To produce the heat required in the process taking place in the reactor 1, fuel is directed via a fuel-feed line 4 into the reactor 1 and is burned there.

To control the reactor temperature, a temperature control 5 is provided which, as manipulated variable or control element, has a flow controller 6 with a flow transducer 7 in order to control the fuel fed to the reactor 1 through the fuel-feed line 4 and in order to thereby set the temperature in the reactor 1.

A differential-pressure sensor 12 having a differential-pressure transducer which measures the differential pressure in a conveying line 14 connected to an airlift 13 is connected to the temperature control 5. With this conveying line 14, material introduced into the plant is conveyed to the reactor 1, the differential pressure over the conveying line 14 being a measure of the material quantity conveyed. This pressure value measured by the differential-pressure sensor 12 is processed with suitable control functions in a function block 11 of the temperature control 5, and a manipulated variable is output for the flow controller 6 for controlling the fuel feed. As a result, the fuel feed or the fuel mass flow becomes a function of the material quantity conveyed, there being in particular a proportional relationship. In this case, the fuel feed is appropriately adapted in an accurately timed manner with a fluctuation of the material charge introduced into the reactor 1 and a temperature fluctuation in the reactor 1 essentially does not occur.

In addition, to measure the temperature in the reactor 1, a temperature sensor 8 is provided in the reactor 1, with a temperature transducer connected thereto, which is connected to a temperature controller 9. A control deviation between the measured actual temperature and the desired temperature in the reactor 1, which control deviation is not too large in the normal case on account of the measurement of the material charge in the conveying line 14 and the fact that it is taken into account in the fuel feed, is evaluated by a function block 10 in order to accordingly adapt the fuel feed, if need be, by the flow controller 6.

This temperature controller 9 is optional and, according to the invention, need not necessarily be provided, since a changed material charge is already detected in the conveying line 14 itself by the differential-pressure measurement, so that the fuel feed can be appropriately adapted in anticipation of the temperature change to be expected in the reactor 1. As a result, a temperature change becoming apparent in the reactor can be compensated for before a temperature change is measured by the temperature sensor 8.

In order to take into account the control influences of both the temperature sensor 8 and the differential-pressure sensor 12, the function blocks 10 and 11 are combined in a summing unit 15, which then produces the manipulated variable for the flow controller 6. For example, the function block 10 connected to the temperature controller 9 may be a PI controller and the function block 11 connected to the differential-pressure sensor 12 may be a P controller. However, other functional dependencies and controller types are also possible.

Both the material charge introduced into the reactor and the current reactor temperature are taken into account by the temperature control 5 in order to output a manipulated variable to the subordinate flow controller 6 for the fuel feed. The fuel feed is thus controlled in a temperature flow cascade inter alia as a function of the conveying-line pressure loss of the airlift 13, since the conveying-line pressure loss is clearly correlated with its conveyed mass flow, in particular a solid mass flow.

In this case, the function block 11 or the summing unit 15 of the temperature control 5 takes into account the fact that the material conveyed by the airlift 13 is first of all directed into an airlift cyclone 16 and is separated there from the gas or air flow used for the transport. The material separated in the cyclone 16 passes into a plunge pot 17, from which the material is passed on to a dryer 18, in particular a venturi dryer. Connected downstream of the dryer 18 is a material-delivery cyclone 19, in which the material to be fed to the reactor 1 is separated from the heated exhaust-gas flow. From the material-delivery cyclone 19, the material passes via the material-feed line 2 into the reactor 1, in which it is caught by the gas-feed pipe 3 and forms a circulating fluidized bed.

After the heat treatment in the reactor 1, the material together with the gas flow is discharged through a line 20 from the top region of the reactor 1 into a return cyclone 21, in which the treated material is separated from the gas flow and directed to a plunge pot 22. The material directed into the plunge pot 22 is partly fed back into the reactor 1 and partly discharged into a mixing pot 23.

In the mixing pot 23, material treated in the reactor 1 is mixed with untreated material which is directed via a bypass line 24 from the plunge pot 17 of the airlift cyclone 16 via a cellular wheel sluice 25 past the reactor 1. In this case, the quantity of the material directed past the reactor 1 is recorded by a mass-flow sensor (not shown) and is taken into account by the temperature control 5, for example in the summing unit 15 or the function blocks 10, 11, so that the fuel mass flow is adapted to the material quantity actually introduced into the reactor 1.

In order to save energy, the hot reactor exhaust gas separated from the treated material in the return cyclone 21 is directed to the dryer 18 for drying and preheating the material to be fed to the reactor 1. From the material-delivery cyclone 19 connected downstream of the dryer 18, the heated exhaust gas is directed to a further dryer 26, for example a venturi dryer, which is arranged upstream of the airlift 13. The material to be treated passes into the dryer 26 via a conveyor 27 and, with the gas flow which serves the preheating or drying, is directed into a filter 28, for example an electrostatic filter, from which the material passes into the airlift 13.

The conveyor 27 has a conveyor belt 29, which feeds the raw material to a material-charging screw 30, which introduces the material to be treated into the dryer 26.

The material-charging screw 30 is controlled by a material-charge control 31 having a material-charge controller 37, which is also connected to the differential-pressure sensor 12 and controls the differential pressure over the conveying line 14 by varying the rotational speed of the material-charging screw 30 to a constant value. This material-charge control 31 is a variant of the control according to the invention for the temperature control 5. In this exemplary embodiment, the control according to the invention is formed by a combination of the material-charge control 31 and the temperature control 5. However, the control concept according to the invention is also realized by the material-charge control 31 and the temperature control 5 in each case by itself, so that each control 5, 31, according to the invention, can also be realized on its own in a plant.

The material-charge control 31 of the plant helps to cut out or minimize the disturbance variable of a variable material charge which initiates temperature fluctuations in the reactor 1 or creates a control demand for the temperature control 5, and helps to create uniform process conditions in the plant. To this end, in the event of fluctuations of the material quantity in the conveying line 14, the conveying capacity of the material-charging screw 30 is appropriately readjusted by the material-charge controller 37. So that sufficient raw material is available at the material-charging screw 30, a level controller 32 is provided for the drive of the conveyor belt 29.

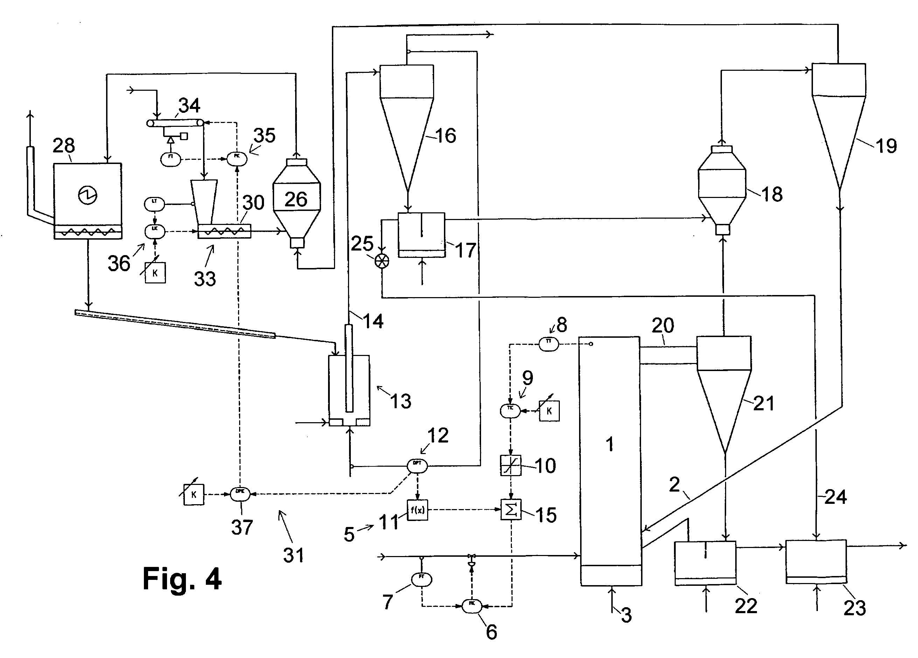

The plant shown in Fig. 4 corresponds essentially to the plant according to Fig. 3. The same plant parts are therefore provided with the same reference numerals and are no longer described below.

In contrast to the plant described above, the conveyor 33 of this plant, instead of the conveyor belt 29, has a weighfeeder 34, on which the raw material is weighed and fed to the material-charging screw 30. In this case, the material-charge controller 37 presets an actuating signal for a mass-flow controller 35 of the weighfeeder 34 in order to control the charge mass flow. Furthermore, a corresponding transducer is connected to the mass-flow controller. The material-charging screw 30 is activated by a level controller 36. On account of the weighfeeder 34, the material-charge mass flow can in this case be controlled especially accurately and thus contributes to a high stability of the temperature control 5.

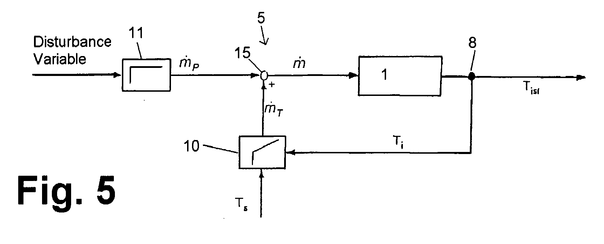

The principle of the temperature control 5 is schematically shown once again in Fig. 5. The temperature control 5, by means of the temperature sensor 8, measures the actual temperature at the outlet of the reactor 1, compares this actual temperature with the preset desired temperature in the function block 10, for example a PI controller, and subsequently outputs a manipulated variable *ṁ_{T}* for the fuel mass flow on the basis of the control deviation in the temperature. In the function block 11, for example a P controller, the pressure difference measured over the conveying line 14 in the airlift 13 is taken into account as disturbance variable, and a fuel mass flow proportional to the actual material charge is output as manipulated variable *ṁ_{P}.* As a result, the fuel feed is adapted before a control deviation in the temperature can be measured. The manipulated variables of the function blocks or control elements 10 and 11 are combined in the summing unit 15 and are converted into a manipulated variable *ṁ* for the total fuel mass flow.

By the material quantity determined in a conveying line to the reactor being taken into account according to the invention, it is possible by means of the controls according to the invention to keep the process conditions and in particular the temperature in the reactor 1 constantly at a set point predetermined in terms of the process.

**List of reference numerals:**

| | | | |
|---|---|---|---|
| 1 | Reactor | 20 | Line |
| 2 | Material-feed line | 21 | Return cyclone |
| 3 | Gas-feed pipe | 22 | Plunge pot |
| 4 | Fuel-feed line | 23 | Mixing pot |
| 5 | Temperature control | 24 | Bypass line |
| 6 | Flow controller, control element | 25 | Cellular wheel sluice |
| 7 | Flow transducer | 26 | Dryer |
| 8 | Temperature sensor | 27 | Conveyor |
| 9 | Temperature controller | 28 | Filter |
| 10 | Function block | 29 | Conveyor belt |
| 11 | Function block | 30 | Material-charging screw |
| 12 | Differential-pressure sensor | 31 | Material-charge control |
| 13 | Airlift | 32 | Level controller |
| 14 | Conveying line | 33 | Conveyor |
| 15 | Summing unit | 34 | Conveyor-type weigher |
| 16 | Airlift cyclone | 35 | Mass-flow controller |
| 17 | Plunge pot | 36 | Level controller |
| 18 | Dryer | 37 | Material-charge controller |
| 19 | Material-delivery cyclone | | |

## Claims

1. Method of controlling the process conditions, in particular the temperature, in a reactor (1) of a plant into which, in particular, granular material is introduced and transported through a conveying line (14) to the reactor (1), the material quantity transported in the conveying line (14) being determined and being used as control variable and/or disturbance variable for controlling the process conditions, in particular the temperature, **characterized in that** the material quantity of the material fed to the reactor (1) is determined by measuring the pressure and/or the pressure loss in a conveying line (14) upstream of the reactor (1) in an airlift (13).

2. Method according to claim 1, **characterized in that** the material quantity in the conveying line (14) is controlled to a predeterminable value.

3. Method according to claim 2, **characterized in that** the material quantity in the conveying line (14) is controlled by a conveyor (27, 33), with which the material is introduced into the plant, in particular by varying the rotational speed of a material-charging screw (30) and/or by a weighfeeder (34) upstream of the material-charging screw (30).

4. Method according to one of the preceding claims, **characterized in that** the heat supply to the reactor (1) depends on the material quantity determined.

5. Method according to claim 4, **characterized in that** the heat supply is effected by burning fuel in the reactor (1) and the fuel feed is controlled for controlling the heat supply.

6. Method according to one of claims 4 or 5, **characterized in that** the reactor temperature is measured in the reactor (1) and the heat supply additionally depends on the reactor temperature determined.

7. Method according to one of claims 4 to 6, **characterized in that** the time from the determination of the material quantity until the feeding into the reactor (1) is taken into account in the control of the heat supply.

8. Method according to one of the preceding claims, **characterized in that** a material discharge, for example via a bypass line (24), between the determination of the material quantity and the feeding into the reactor (1) is determined if need be and is taken into account in the control in particular of the material quantity and/or of the heat supply.

9. Method according to one of the preceding claims, **characterized in that** the material is dried and/or preheated before the determination of the material quantity in the conveying line (14).

10. Method according to one of the preceding claims, **characterized in that** a gas/solid suspension forms in the reactor (1), for example as a circulating fluidized bed.

11. Plant for the heat treatment of material fed to a reactor (1), in particular for carrying out the method according to one of Claims 1 to 11, having a conveying line (14) for the transport of granular material to the reactor (1) and having at least one control (5, 31), and a measuring device (12) which is connected to the control (5, 31) and is intended for determining the material quantity of the material transported in the conveying line (14) to the reactor (1), **characterized in that** the conveying line (14) is a perpendicularly arranged rising line of an airlift (13).

12. Plant according to claim 11, **characterized in that** the measuring device (12) is a differential-pressure measuring device for measuring the differential pressure over the conveying line (14).

13. Plant according to one of claims 11 or 12, **characterized in that** the control is a temperature control (5) and/or a material-charge control (31).

14. Plant according to claim 13, **characterized in that** a temperature sensor (8) connected to the temperature control (5) is arranged in the reactor (1).

15. Plant according to claim 13 or 14, **characterized in that** the temperature control (5) has a control element (6) for controlling a fuel mass flow, directed to the reactor (1) for the combustion, on the basis of the determined material quantity and/or the measured reactor temperature.

16. Plant according to one of claims 13 to 15, **characterized by** a conveyor (27, 33) which is connected to the material-charge control (31) and is intended for the controlled introduction of material into the plant, so that the material quantity in the conveying line (14) can be set to a predeterminable value.

17. Plant according to one of claims 11 to 16, **characterized by** at least one drying device (18, 26) upstream of and/or downstream of the conveying line (14).

## Patentansprüche

1. Verfahren zur Regelung der Prozessbedingungen, insbesondere der Temperatur, in einem Reaktor (1) einer Anlage, in die insbesondere körniges Material eingetragen und durch eine Förderleitung (14) zu dem Reaktor (1) transportiert wird, wobei die in der Förderleitung (14) transportierte Materialmenge ermittelt und als Regelgröße und/oder Störgröße für die Regelung der Prozessbedingungen, insbesondere der Temperatur, verwendet wird, **dadurch gekennzeichnet, dass** die Materialmenge des dem Reaktor (1) zugeführten Materials durch Messung des Drucks und/oder des Druckverlusts in einer Förderleitung (14) vor dem Reaktor (1) in einem Airlift (13) ermittelt wird.

2. Verfahren nach Anspruch 1, **dadurch gekennzeichnet, dass** die Materialmenge in der Förderleitung (14) auf einen vorgebbaren Wert geregelt wird.

3. Verfahren nach Anspruch 2, **dadurch gekennzeichnet, dass** die Regelung der Materialmenge in der Förderleitung (14) durch einen Förderer (27, 33) erfolgt, mit dem das Material in die Anlage eingetragen wird, insbesondere durch Variation der Drehzahl einer Materialeintragschnecke (30) und/oder eine Dosierbandwaage (34) vor der Materialeintragschnecke (30) erfolgt.

4. Verfahren nach einem der vorhergehenden Ansprüche, **dadurch gekennzeichnet, dass** die Wärmezufuhr in den Reaktor (1) von der ermittelten Materialmenge abhängt.

5. Verfahren nach Anspruch 4, **dadurch gekennzeichnet, dass** die Wärmezufuhr durch Verbrennung von Brennstoff in dem Reaktor (1) erfolgt und die Brennstoffzufuhr zur Regelung der Wärmezufuhr geregelt wird.

6. Verfahren nach einem der Ansprüche 4 oder 5, **dadurch gekennzeichnet, dass** in dem Reaktor (1) eine Messung der Reaktortemperatur erfolgt und die Wärmezufuhr zusätzlich von der ermittelten Reaktortemperatur abhängt.

7. Verfahren nach einem der Ansprüche 4 bis 6, **dadurch gekennzeichnet, dass** die Zeit von der Ermittlung der Materialmenge bis zur Zufuhr in den Reaktor (1) bei der Regelung der Wärmezufuhr berücksichtigt wird.

8. Verfahren nach einem der vorhergehenden Ansprüche, **dadurch gekennzeichnet, dass** ein Materialaustrag, bspw. über eine Bypassleitung (24), zwischen der Bestimmung der Materialmenge und der Zufuhr in den Reaktor (1) ggf. ermittelt und bei der Regelung insbesondere der Materialmenge und/oder der Wärmezufuhr berücksichtigt wird.

9. Verfahren nach einem der vorhergehenden Ansprüche, **dadurch gekennzeichnet, dass** Material vor der Ermittlung der Materialmenge in der Förderleitung (14) getrocknet und/oder vorgewärmt wird.

10. Verfahren nach einem der vorhergehenden Ansprüche, **dadurch gekennzeichnet, dass** sich in dem Reaktor (1) eine Gas-Feststoff-Suspension ausbildet, bspw. als zirkulierende Wirbelschicht.

11. Anlage zur Wärmebehandlung von einem Reaktor (1) zugeführtem Material, insbesondere zur Durchführung des Verfahrens nach einem der Ansprüche 1 bis 10, mit einer Förderleitung (14) zum Transport von körnigem Material zu dem Reaktor (1) und mindestens einer Regelung (5, 31) und einer an die Regelung (5, 31) angeschlossenen Messeinrichtung (12) zur Ermittlung der Materialmenge des in der Förderleitung (14) zu dem Reaktor transportierten Materials, **dadurch gekennzeichnet, dass** die Förderleitung (14) eine senkrecht angeordnete Steigleitung eines Airlifts (13) ist.

12. Anlage nach Anspruch 11, **dadurch gekennzeichnet, dass** die Messeinrichtung (12) eine Differenzdruck-Messeinrichtung zum Messen des Differenzdrucks über die Förderleitung (14) ist.

13. Anlage nach einem der Ansprüche 11 oder 12, **dadurch gekennzeichnet, dass** die Regelung eine Temperatur-Regelung (5) und/oder eine Materialeintrags-Regelung (31) ist.

14. Anlage nach Anspruch 13, **dadurch gekennzeichnet, dass** in dem Reaktor (1) ein an die Temperatur-Regelung (5) angeschlossener Temperaturmessfühler (8) angeordnet ist.

15. Anlage nach Anspruch 13 oder 14, **dadurch gekennzeichnet, dass** die Temperatur-Regelung (5) ein Regelglied (6) zur Regelung eines dem Reaktor (1) zur Verbrennung zugeleiteten Brennstoff-Massestroms aufgrund der ermittelten Materialmenge und/oder der gemessenen Reaktortemperatur aufweist.

16. Anlage nach einem der Anspruch der Ansprüche 13 bis 15, **gekennzeichnet durch** einen an die Materialeintrags-Regelung (31) angeschlossenen Förderer (27, 33) zum geregelten Eintrag von Material in die Anlage, so dass die Materialmenge in der Förderleitung (14) auf einen vorgebbaren Wert einstellbar ist.

17. Anlage nach einem der Ansprüche 11 bis 16, **gekennzeichnet durch** mindestens eine Trockeneinrichtung (18, 26) vor und/oder hinter der Förderleitung (14).

## Revendications

1. Procédé de commande de conditions de processus, en particulier de la température dans un réacteur (1) d'une installation dans lequel, en particulier, de la matière granulaire est introduite et transportée à travers une ligne de transport (14) vers le réacteur (1), la quantité de matière transportée dans la ligne de transport (14) étant déterminée et utilisée en tant que variable de commande et/ou de perturbation pour commander les conditions de processus, en particulier la température, **caractérisé en ce que** la quantité de matière alimentée vers le réacteur (1) est déterminée en mesurant la pression et/ou la perte de pression dans une ligne de transport (14) en amont du réacteur (1) dans une aspiration d'air verticale (13).

2. Procédé selon la revendication 1, **caractérisé en ce que** la quantité de matière dans la ligne de transport (14) est commandée à une valeur pouvant être prédéterminée.

3. Procédé selon la revendication 2, **caractérisé en ce que** la quantité de matière dans la ligne de transport (14) est commandée par un convoyeur (27, 33) avec lequel la matière est introduite dans l'installation, en particulier en variant la vitesse de rotation d'une vis de chargement de matière (30) et/ou un doseur pondéral (34) en amont de la vis de chargement de matière (30).

4. Procédé selon l'une des revendications précédentes, **caractérisé en ce que** la fourniture de chaleur au réacteur (1) dépend de la quantité de matière déterminée.

5. Procédé selon la revendication 4, **caractérisé en ce que** la fourniture de chaleur est effectuée en brûlant du combustible dans le réacteur (1) et l'alimentation en combustible est commandée pour commander la fourniture de chaleur.

6. Procédé selon la revendication 4 ou 5, **caractérisé en ce que** la température du réacteur est mesurée dans le réacteur (1) et la fourniture de chaleur dépend aussi de la température du réacteur déterminée.

7. Procédé selon l'une des revendications 4 à 6, **caractérisé en ce que** la durée, de la détermination de la quantité de matière jusqu'à l'alimentation dans le réacteur (1), est prise en compte dans la commande de la fourniture de chaleur.

8. Procédé selon l'une des revendications précédentes, **caractérisé en ce qu'**une décharge de matière, par exemple via une ligne de dérivation (24) entre la détermination de la quantité de matière et l'alimentation dans le réacteur (1), est déterminée si besoin et est prise en compte dans la commande en particulier de la quantité de matière et/ou de la fourniture de chaleur.

9. Procédé selon l'une des revendications précédentes, **caractérisé en ce que** la matière est séchée et/ou préchauffée avant la détermination de la quantité de matière dans la ligne de transport (14).

10. Procédé selon l'une quelconque des revendications précédentes, **caractérisé en ce qu'**une suspension gazeuse/solide se forme dans le réacteur (1), par exemple en tant que lit fluidisé à circulation.

11. Installation pour le traitement thermique de matière alimentée vers un réacteur (1), en particulier pour exécuter le procédé selon l'une des revendications 1 à 11, présentant une ligne de transport (14) pour le transport de matière granulaire vers le réacteur (1) et présentant au moins une commande (5, 31) et un dispositif de mesure (12) qui est relié à la commande (5, 31) et est destiné à déterminer la quantité de matière transportée dans la ligne de transport (14) vers le réacteur (1), **caractérisé en ce que** la ligne de transport (14) est une ligne montante agencée perpendiculairement d'une aspiration d'air verticale (13).

12. Installation selon la revendication 11, **caractérisée en ce que** le dispositif de mesure (12) est un dispositif de mesure de la pression différentielle pour mesurer la pression différentielle sur la ligne de transport (14).

13. Installation selon la revendication 11 ou 12, **caractérisée en ce que** la commande est une commande de température (5) et/ou une commande de chargement de matière (31).

14. Installation selon la revendication 13, **caractérisée en ce qu'**un capteur de température (8) relié à la commande de température (5) est agencé dans le réacteur (1).

15. Installation selon la revendication 13 ou 14, **caractérisée en ce que** la commande de température (5) présente un élément de commande (6) pour commander un débit massique de combustible dirigé vers le réacteur (1) pour la combustion, en se basant sur la quantité de matière déterminée et/ou la température du réacteur mesurée.

16. Installation selon l'une quelconque des revendications 13 à 15, **caractérisée par** un convoyeur (27, 33) qui est relié à une commande de chargement de matière (31) et est destiné à l'introduction commandée de matière dans l'installation, de façon à ce que la quantité de matière dans la ligne de transport (14) puisse être réglée à une valeur pouvant être prédéterminée.

17. Installation selon l'une quelconque des revendications 11 à 16, **caractérisée par** au moins un dispositif de séchage (18, 26) en amont et/ou en aval de la ligne de transport (14).
